# FASCICULE DE BREVET EUROPEEN

(11) **EP 2 986 393 B1**
(45) Date de publication et mention de la délivrance du brevet: **15.03.2017**
(21) Numéro de dépôt: 14725231.6
(22) Date de dépôt: 16.04.2014
(51) Int. Cl.: B05B 13/02, E05C 17/52

(54) **INTERFACE DE PROTECTION D'UN DISPOSITIF DE FERMETURE PROVISOIRE D'UN VÉHICULE AUTOMOBILE**
SCHÜTZENDE SCHNITTSTELLE FÜR EINE VORRICHTUNG ZUM VORÜBERGEHENDEN VERSCHLIESSEN EINES KRAFTFAHRZEUGS
PROTECTIVE INTERFACE FOR A TEMPORARY CLOSING DEVICE OF A MOTOR VEHICLE

(30) Priorité: 16.04.2013 FR 1353431
(43) Date de publication de la demande: 24.02.2016
(73) Titulaire: Exsto Thermoplastics, 26100 Romans Sur Isere (FR)
(72) Inventeur: LEON, Bertrand, F-38210 Tullins (FR); MOYART, Eloi, F-26270 Loriol (FR); BOURGEOIS, Olivier, F-38730 Le Pin (FR)
(74) Mandataire: Chevalier, Renaud Philippe
(86) Numéro de dépôt international: PCT/FR2014/050932
(87) Numéro de publication internationale: WO 2014/170610

(56) Documents cités:
- DE-A1- 10 341 145
- DE-U1- 20 203 933
- FR-A1- 2 833 562
- FR-A1- 2 885 633
- FR-A1- 2 893 969
- US-A- 3 758 141
- US-A- 5 675 865

## Description

La présente invention se rapporte à une interface destinée à être fixée sur un rebord tranchant d'un élément ouvrant ou d'un élément fixe d'une carrosserie d'un véhicule automobile, afin de protéger du contact avec ce rebord tranchant le moyen de retenue d'un dispositif de fermeture provisoire de l'élément ouvrant sur l'élément fixe mis en place pour effectuer les étapes de peinture du véhicule automobile.

Les chaînes de fabrication des véhicules automobiles comportent des lignes de peinture des carrosseries qui sont munies d'ouvrants, et notamment de portes. Ces ouvrants ne sont pas encore équipés de leurs dispositifs de fermeture ou serrures définitifs, et il est donc nécessaire de prévoir des dispositifs de fermeture provisoires et amovibles qui permettent de maintenir les ouvrants en position de fermeture intermédiaire sur la carrosserie au cours de son transfert sur la ligne de peinture.

Dans le passé, des dispositifs de fermeture provisoire montés à la place de la serrure définitive au moyen d'organes de fixation, comme par exemple des vis, ont été proposés. Ces dispositifs sont constitués par des pièces métalliques qui ont une durée de vie au moins égale à la durée de fabrication des véhicules sur lesquels ils sont utilisés. Cependant, les pièces métalliques risquent de détériorer la carrosserie et/ou la peinture lors de leur pose ou de leur dépose, et elles doivent subir régulièrement divers traitements de nettoyage, dont la fréquence dépend de la rapidité d'encrassement à chaque passage dans les lignes de peinture. De plus, après ce nettoyage, les dispositifs de fermeture provisoire sont soumis à une opération de remise en conformité sur un gabarit de contrôle.

On connaît aussi un dispositif de fermeture provisoire d'un élément ouvrant sur un élément fixe d'une carrosserie d'un véhicule automobile, un logement étant ménagé dans l'élément ouvrant ou dans l'élément fixe, qui comprend un corps qui est muni de moyens d'ancrage sur l'élément fixe ou sur l'élément ouvrant et qui comporte un moyen de retenue conçu de manière à maintenir l'élément ouvrant dans une position de fermeture intermédiaire par rapport à l'élément fixe, le moyen de retenue étant formé par une languette élastique apte à se fléchir sous la contrainte exercée par un premier rebord du logement sur une extrémité libre de la languette lors du déplacement de l'élément ouvrant d'une position libre d'ouverture vers la position de fermeture intermédiaire.

Ce dispositif de fermeture provisoire présente toutefois l'inconvénient de comporter une languette constituant un moyen de retenue de l'élément ouvrant qui est sujet à de fortes contraintes et déformations lors de la fermeture et de l'ouverture de l'élément ouvrant sur l'élément fixe. L'effort à vaincre lors de cette fermeture ou de cette ouverture est donc important. Les éléments de carrosserie sont généralement mis en forme et découpés par emboutissage ; les zones non visibles par le client final (celui qui achète le véhicule) sont généralement finies grossièrement, les arrêtes de découpes restant tranchantes; ce sont généralement ces zones qui peuvent être utilisées par les dispositifs de fermeture provisoires.

Or, lorsque l'élément ouvrant vient au contact de la languette et force cette dernière à s'effacer, les frottements qui se produisent peuvent écailler la ou les couches de peinture appliquées sur l'élément ouvrant ou l'enlever si la peinture n'est pas encore sèche. On appelle cela le problème des touchés.

En outre, après plusieurs manipulations de l'élément ouvrant, des poussières plastiques ou métalliques, suivant la nature du matériau dont est constitué le dispositif de fermeture provisoire, provenant de celui-ci, et tout particulièrement de la languette du fait de son abrasement causé par les frottements précités, ou de la carrosserie, peuvent se déposer sur la carrosserie, et constituer des défauts visuels définitifs une fois recouverts par une couche de peinture. En effet, ces poussières, lors du passage en cabine ou en étuve, sont véhiculées par le brassage d'air de la ventilation et se redéposent de manière aléatoire sous l'effet de la pesanteur sur la carrosserie. Cela génère des grains, nuisibles à l'aspect de la voiture finie en tant que corps étranger sous le film de peinture de couches ultérieures. C'est pourquoi, on appelle cela le problème des grains.

Il est à noter que ce problème des grains est aggravé si l'élément ouvrant comprend en outre un renfort. En effet, dans ce cas, deux problèmes d'arrachement surviennent, à savoir que l'élément ouvrant et le renfort peuvent abraser la languette du dispositif de fermeture provisoire générant encore plus de poussières plastiques ou métalliques.

Pour éviter cela et satisfaire aux critères de qualité en matière de peinture de carrosserie, les constructeurs de véhicules automobiles sont amenés à retirer ces grains par ponçage local et à appliquer une nouvelle couche de peinture. Ces opérations minutieuses compliquent sérieusement le processus de peinture de carrosserie et en augmente le coût.

C'est pourquoi, les constructeurs cherchent à tout à prix à supprimer cette imperfection visuelle, tant au niveau de l'élément ouvrant que de l'élément fixe, car cela entraîne un taux de recyclage des caisses très élevé et engendre par conséquent des coûts supplémentaires de fabrication des véhicules automobiles.

Le but de l'invention est de proposer une solution qui permet de pallier les inconvénients détaillés ci-dessus et qui est tout particulièrement appropriée pour éviter la génération de grains au cours des opérations de peinture de la carrosserie de véhicule automobile, et ce lorsqu'on utilise un dispositif de fermeture provisoire tel que décrit ci-dessus qui peut être abrasé par un rebord tranchant de l'élément fixe ou de l'élément ouvrant.

L'invention a pour premier objet une interface qui présente un corps, ledit corps comporte des premiers moyens de fixation qui permettent à l'interface de se fixer sur un élément ouvrant ou un élément fixe d'un véhicule automobile de manière à venir protéger un dispositif de fermeture provisoire prévu pour être fixé sur l'élément ouvrant ou sur l'élément fixe du contact avec un premier rebord de l'élément ouvrant ou de l'élément fixe, ledit dispositif de fermeture provisoire étant du type à comporter au moins un corps muni d'un moyen de retenue élastiquement déformable conçu de manière à maintenir l'élément ouvrant dans une position de fermeture intermédiaire par rapport à l'élément fixe, ledit corps de l'interface comprenant en outre au moins un premier organe de butée présentant une rigidité déterminée de manière à ce que les contraintes exercées par le premier organe de butée de l'interface contre le moyen de retenue du dispositif de fermeture provisoire, lors du déplacement de l'élément ouvrant d'une position d'ouverture vers la position de fermeture intermédiaire ou lors du déplacement de l'élément ouvrant de la position de fermeture intermédiaire vers une position d'ouverture, forcent le moyen de retenue du dispositif de fermeture provisoire à se déformer et à s'effacer durant le contact du premier organe de butée de l'interface avec le moyen de retenue du dispositif de fermeture provisoire, ladite interface se caractérise en ce :
- qu'elle comprend une première paroi présentant une première partie de paroi et une deuxième partie de paroi, ladite première partie de paroi étant prolongée par ladite deuxième partie de paroi, ladite deuxième partie de paroi constituant le premier organe de butée de l'interface, lesdits premiers moyens de fixation étant conçus de manière à venir fixer ladite première partie de paroi contre une paroi du premier rebord de l'élément fixe ou de l'élément ouvrant, et
- qu'elle présente une portion en forme générale de cage qui comprend une pluralité de parois, ladite première partie de paroi de la première paroi formant une des parois de ladite pluralité de parois de la portion en forme générale de cage.

Bien entendu, le premier organe de butée de l'interface peut comprendre tout élément rapporté sur la deuxième partie de paroi de la première paroi de l'interface.

Grâce à la fixation de l'interface selon l'invention sur l'élément ouvrant ou sur l'élément fixe, le premier rebord de l'élément ouvrant ou de l'élément fixe présentant généralement un aspect tranchant et qui donc est susceptible d'abraser le moyen de retenue du dispositif de fermeture provisoire ne vient plus en contact avec ce moyen de retenue. Ainsi, le dispositif de fermeture provisoire n'est plus abrasé après plusieurs manipulations de l'élément ouvrant, ce qui limite son usure mais surtout cela évite le problème des grains évoqués ci-dessus.

La première partie de paroi de la première paroi de l'interface constitue une surface de contact avec une paroi du premier rebord de l'élément ouvrant ou de l'élément fixe.

De plus, la deuxième partie de paroi de la première paroi de l'interface qui fait donc saillie du premier rebord de l'élément ouvrant ou de l'élément fixe permet :
- non seulement d'éviter la formation de grains, mais aussi
- d'éviter le problème des touchés.

En d'autres termes, lorsque cette deuxième partie de paroi de la première paroi de l'interface vient en contact du moyen de retenue du dispositif de fermeture provisoire au cours de la fermeture de l'élément ouvrant sur l'élément fixe, ou au cours de l'ouverture de l'élément ouvrant, le moyen de retenue du dispositif de fermeture provisoire est suffisamment éloigné des zones visibles (par le client final) de l'élément ouvrant pour éviter tout touché dans ces zones, même dans le cas où l'élément ouvrant a une géométrie particulière qui engendre habituellement des touchés.

L'interface selon l'invention est particulièrement appropriée si l'élément ouvrant ou l'élément fixe sur lequel est fixée l'interface ne comprend pas de renfort et qu'il n'est pas prévu ultérieurement d'habiller la zone où était présente l'interface pendant les opérations de peinture par une pièce en plastique.

L'interface selon l'invention est aussi appropriée pour les cas où :
- l'élément fixe ou l'élément ouvrant est dépourvu de renfort mais la zone où était présente l'interface pendant les opérations de peinture est ultérieurement habillée par une pièce en plastique ;
- l'élément fixe ou l'élément ouvrant comprend un renfort et la zone où était présente l'interface pendant les opérations de peinture est ultérieurement ou non habillée par une pièce.

La portion en forme générale de cage présente l'avantage d'assurer une bonne tenue mécanique à l'interface.

La portion en forme générale de cage peut être conçue pour pouvoir y loger le dispositif de fermeture provisoire au cours des opérations de peinture.

De manière préférée, la première partie de paroi et la deuxième partie de paroi de la première paroi de l'interface sont coplanaires.

Dans un mode de réalisation avantageux de l'invention, la deuxième partie de paroi de la première paroi de l'interface qui constitue le premier organe de butée de l'interface présente une extrémité libre avec une bordure arrondie. Cette bordure arrondie assure que l'interface selon l'invention ne détériore pas par abrasion le moyen de retenue du dispositif de fermeture provisoire lors de son contact avec cette bordure arrondie au cours du déplacement de l'élément ouvrant soit d'une position libre d'ouverture vers la position de fermeture intermédiaire, soit de la position de fermeture intermédiaire vers une position libre d'ouverture.

De manière avantageuse, l'interface comprend en outre au moins un moyen de préhension. Cela présente l'avantage de pouvoir mettre aisément en place l'interface et aussi de la récupérer facilement une fois les opérations de peinture achevées.

L'interface peut être réalisée en un matériau plastique ou en un matériau métallique. Elle peut être monobloc.

Si l'interface est réalisée en un matériau métallique, elle présente l'avantage d'avoir une meilleure tenue mécanique par rapport à une interface réalisée en un matériau plastique.

Dans le cas d'une interface en matériau plastique, on cherchera à améliorer la tenue mécanique du matériau plastique, par exemple en utilisant de préférence un matériau chargé avec du verre. Cela permettra d'améliorer la résistance du matériau de l'interface. Bien entendu, d'autre solutions permettant d'améliorer la résistance mécanique du matériau plastique de l'interface peuvent être envisagées et sont à la portée de l'homme du métier.

De manière avantageuse, la portion en forme générale de cage comprend au moins :
- ladite première paroi ;
- une deuxième paroi qui est opposée à la première paroi ;
- une paroi supérieure qui relie la première paroi à la deuxième paroi;
- une première paroi latérale qui relie la première paroi à la deuxième paroi ;
- une deuxième paroi latérale opposée à la première paroi latérale et qui relie la première paroi à la deuxième paroi.

La première paroi, la deuxième paroi, la paroi supérieure, la première paroi latérale et la deuxième paroi latérale délimitent un logement destiné à loger ledit dispositif de fermeture provisoire.

De manière préférée, le moyen de préhension est disposé sur la paroi supérieure de la portion en forme générale de cage. Il est ainsi particulièrement accessible à l'opérateur. L'interface selon l'invention pourra ainsi être aisément fixée sur l'élément ouvrant ou l'élément fixe du véhicule automobile.

La portion en forme générale de cage peut en outre être connectée à au moins deux platines qui comprennent les premiers moyens de fixation, lesdits premiers moyens de fixation étant conçus de manière à venir fixer la première partie de paroi de la première paroi de l'interface contre une paroi du premier rebord de l'élément fixe ou de l'élément ouvrant. Ces premiers moyens de fixation peuvent comprendre des moyens de vissage. Bien entendu, d'autres moyens de fixation peuvent être envisagés et sont parfaitement à la portée de l'homme du métier.

Selon un mode de réalisation de l'invention, la deuxième paroi de l'interface comprend une zone destinée à coopérer avec une butée que présente le dispositif de fermeture provisoire.

Ainsi, dans ce mode de réalisation de l'invention, cette zone de la deuxième paroi de l'interface permet aussi d'éviter des touchés, mais à des endroits de l'élément ouvrant ou de l'élément fixe qui sont différents des touchés évités grâce à la deuxième partie de la première paroi de l'interface.

En outre, lorsque l'interface selon ce mode de réalisation de l'invention est fixée sur l'élément ouvrant, cette zone de la deuxième paroi de l'interface a aussi l'avantage d'éviter les déformations de l'élément ouvrant, en particulier lorsqu'il est claqué soit par l'opérateur, soit du fait des chocs créés lors des transferts du véhicule au cours du procédé de fabrication du véhicule automobile.

Selon une variante de ce deuxième mode de réalisation de l'interface, cette zone qui est destinée à coopérer avec une butée que présente le dispositif de fermeture provisoire comprend un deuxième organe de butée faisant saillie de ladite zone.

La présente invention a pour objet un kit qui comprend :
- au moins une interface telle que décrite ci-dessus ;
- au moins un dispositif de fermeture provisoire du type à comporter au moins un corps muni d'un moyen de retenue élastiquement déformable conçu de manière à maintenir un élément ouvrant dans une position de fermeture intermédiaire par rapport à un élément fixe.

De manière préférée, le moyen de retenue du dispositif de fermeture provisoire est formé par une languette élastique.

De manière avantageuse, le moyen de retenue est formé par une languette élastique apte à se fléchir sous une contrainte exercée sur une extrémité libre de la languette. La partie de l'extrémité libre de la languette forme avantageusement un nez en saillie. Cette partie de l'extrémité libre de la languette peut former un nez en saillie sur une longueur comprise entre un quart et la moitié de la longueur de la languette.

Le dispositif de fermeture provisoire peut en outre comporter les autres caractéristiques suivantes :
- Il comporte une butée destinée à coopérer avec un second rebord de l'élément fixe ou de l'élément ouvrant lors du déplacement de l'élément ouvrant de la position libre d'ouverture vers la position de fermeture intermédiaire.
- Son corps est prolongé dans sa zone correspondant sensiblement à la base de la languette par une platine suspendue au dessus d'une zone évidée, la platine et la languette étant reliées par une arche assurant une liaison souple.
- L'arche est raccordée à la languette sensiblement en son milieu et à la platine sensiblement à son extrémité libre.
- La languette et la platine forment un angle aigu.
- La languette, la platine et l'arche sont venues de matière avec le corps du dispositif.
- Le nez en saillie est situé à l'extrémité de la languette.
- L'épaisseur du nez en saillie est inférieure à 2 mm.
- La languette comporte à sa base une partie évidée.
- Le corps comporte au-dessous de sa face inférieure une plaque s'étendant de part et d'autre du corps et perpendiculairement à ce corps, la surface inférieure de la plaque étant pourvue d'une pluralité de plots ménageant un espace entre la plaque et la surface d'appui correspondante de l'élément fixe ou de l'élément ouvrant.
- Les plots sont répartis sur la périphérie de la surface inférieure de la plaque.

La présente invention a aussi pour objet un ensemble comprenant un élément fixe, un élément ouvrant, au moins une interface telle que décrite ci-dessus et au moins un dispositif de fermeture provisoire tel que décrit ci-dessus.

Dans un mode de réalisation de l'ensemble, le dispositif de fermeture provisoire est du type à comporter au moins un corps muni d'un moyen de retenue élastiquement déformable conçu de manière à maintenir l'élément ouvrant dans une position de fermeture intermédiaire par rapport à l'élément fixe.

Dans un mode de réalisation de l'invention, l'interface est fixée sur l'élément fixe et le dispositif de fermeture provisoire est fixé sur l'élément ouvrant.

Dans un autre mode de réalisation de l'invention, l'interface est fixée sur l'élément ouvrant et le dispositif de fermeture provisoire est fixé sur l'élément fixe.

D'autres caractéristiques et avantages de l'invention apparaîtront à la lecture de la description qui va suivre et faite en référence aux dessins annexés, sur lesquels :
- La figure 1 est une vue en perspective d'une interface selon un premier mode de réalisation de l'invention.
- La figure 2 est une vue en perspective et de côté de l'interface représentée à la figure 1 qui a été mise en place sur un premier rebord d'un élément ouvrant, ainsi que d'un dispositif de fermeture provisoire qu'elle est destinée à protéger.
- La figure 3 est une vue en perspective arrière de l'interface, de l'élément ouvrant et du dispositif de fermeture provisoire représentés à la figure 2.
- La figure 4 est une vue en perspective d'une interface selon un deuxième mode de réalisation de l'invention.
- La figure 5 est une vue en perspective et de côté de l'interface représentée à la figure 4.
- La figure 6 est une vue en perspective de l'interface représentée aux figures 4 et 5 et qui a été mise en place sur un premier rebord d'un élément ouvrant, ainsi que d'un dispositif de fermeture provisoire qu'elle est destinée à protéger.
- La figure 7 est une autre vue en perspective de l'interface et du dispositif de fermeture provisoire représentés à la figure 6.

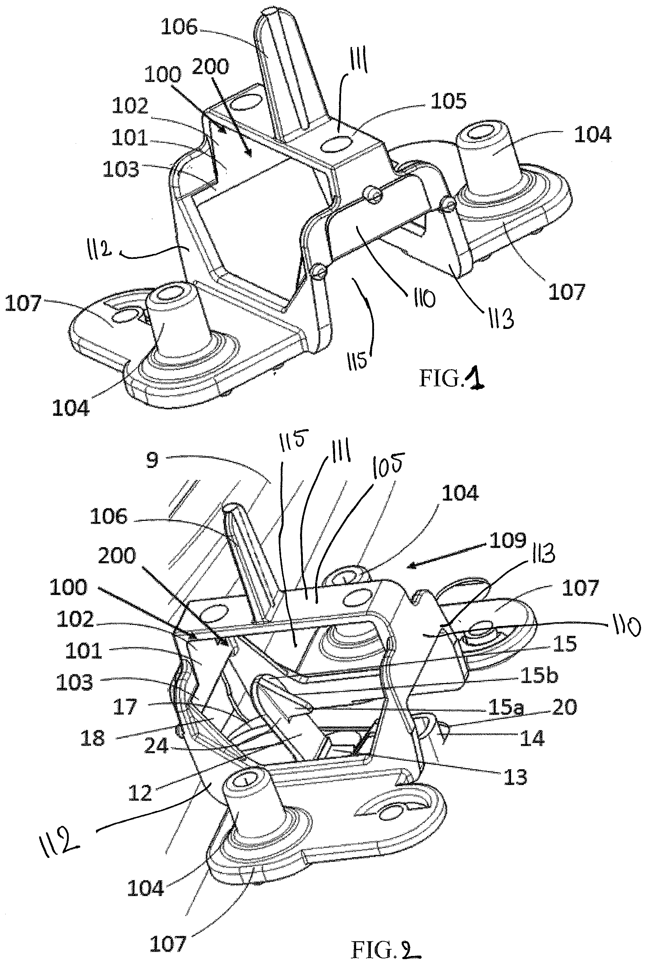

La figure 1 représente un premier mode de réalisation d'une interface 100 selon l'invention. L'interface 100 comprend un corps 200. L'interface 100 présente une portion 105 en forme générale de cage.

Ladite portion 105 en forme générale de cage comprend une pluralité de parois.

La portion 105 en forme générale de cage comprend au moins :
- une première paroi 101 qui présente une première partie de paroi 102 et une deuxième partie de paroi 103, ladite deuxième partie de paroi 103 prolongeant la première partie de paroi 102 ;
- une deuxième paroi 110 qui est opposée à la première paroi 101 ;
- une paroi supérieure 111 qui relie la première paroi 101 à la deuxième paroi 110 ;
- une première paroi latérale 112 qui relie la première paroi 101 à la deuxième paroi 110 ;
- une deuxième paroi latérale 113 qui est opposée à la première paroi latérale 112 et qui relie la première paroi 101 à la deuxième paroi 110.

La première paroi 101, la deuxième paroi 110, la paroi supérieure 111, la première paroi latérale 112 et la deuxième paroi latérale 113 délimitent un logement 115 destiné à loger un dispositif de fermeture provisoire 12 qui est décrit ci-après.

La deuxième partie de paroi 103 de la première paroi 101 constitue un premier organe de butée de l'interface 100.

Bien entendu, le premier organe de butée de l'interface 100 peut comprendre tout élément rapporté sur la deuxième partie de paroi 103 de la première paroi 101 de l'interface 100.

La première partie de paroi 102 et la deuxième partie de paroi 103 sont coplanaires.

Cette portion 105 en forme générale de cage telle que décrite ci-dessus présente l'avantage que la paroi supérieure 111 et les première paroi latérale 112 et deuxième paroi latérale 113 contribuent à augmenter la rigidité de l'interface 100.

Ainsi, l'interface 100 selon l'invention présente une résistance mécanique particulièrement appropriée qui permet :
- une utilisation parfaite de l'interface 100, et ce même dans des conditions sévères de manipulation, par exemple de fortes températures, des claquements violents et brusques d'un élément ouvrant 9,
- une utilisation de l'interface 100 lorsqu'une retenue importante de l'élément ouvrant 9 est nécessaire,
et ce sans le risque de perdre l'interface 100 au cours du procédé de fabrication du véhicule automobile, et tout particulièrement au cours des étapes de peinture de la carrosserie.

L'interface 100 comporte en outre un moyen de préhension 106 qui est disposé sur la paroi supérieure 111. Plus précisément, le moyen de préhension 106 s'étend selon une direction sensiblement perpendiculaire à la paroi supérieure 111. Le moyen de préhension 106 présente une forme générale de languette appropriée pour être prise en main.

La portion 105 en forme générale de cage est en outre connectée à deux platines 107 qui comprennent chacune des premiers moyens de fixation 104. Ces premiers moyens de fixation 104 sont conçus de manière à fixer la première partie de paroi 102 de l'interface 100 contre une paroi du premier rebord 10 de l'élément ouvrant 9. Ces moyens de fixation 104 consistent en des moyens de vissage. Bien entendu, dans le cadre de la présente invention, d'autres premiers moyens de fixation 104 peuvent être envisagés et sont parfaitement à la portée de l'homme du métier.

Les deux platines 107 sont orientées vers l'extérieur de la portion 105 en forme générale de cage. Elles sont sensiblement perpendiculaires à la première paroi latérale 112 et à la deuxième paroi latérale 113 et sont disposées à une extrémité desdites première paroi latérale 112 et deuxième paroi latérale 113 qui est opposée à la paroi supérieure 111.

L'interface 100 est fixée avec les premiers moyens de fixation 104 décrits ci-dessus sur l'élément ouvrant 9 au niveau de trous (non visible sur les figures) dont est pourvu l'élément ouvrant 9.

Ces trous (non visibles sur les figures) sont des trous destinés à la fixation des serrures définitives du véhicule automobile. Ces trous sont dits « standards » du fait qu'ils sont situés toujours quasiment aux mêmes endroits sur les éléments ouvrants 9 des véhicules automobiles, et ce quel que soit le constructeur.

Ainsi, on peut aisément se servir de ces trous destinés à la fixation de la serrure définitive pour fixer l'interface 100 sur l'élément ouvrant 9 lors des opérations de fabrication du véhicule automobile, et en particulier préalablement aux opérations de peinture.

Du fait que tous les éléments ouvrants 9 (à savoir aussi bien l'élément ouvrant avant gauche ou avant droit que l'élément ouvrant arrière gauche ou arrière droit) d'un véhicule automobile présentent de tels trous standards, l'interface 100 selon l'invention peut être fixée sans aucune difficulté sur chacun des différents éléments ouvrants 9 que comprend un véhicule automobile.

Par ailleurs, de même que l'élément ouvrant 9, l'élément fixe 18 d'un véhicule automobile comprend aussi des trous standards destinés à la fixation de la serrure définitive. Ainsi, l'interface 100 selon l'invention est aussi appropriée pour être fixée avec les trous standards d'un élément fixe 18 d'un véhicule automobile.

Cela présente l'avantage qu'on peut fixer l'interface 100 selon l'invention sur l'élément ouvrant 9 ou l'élément fixe 18 sans que cela ne requière de modification de l'élément ouvrant 9 ou de l'élément fixe 18 (autrement dit de modification de conception de l'élément ouvrant 9 ou de l'élément fixe 18).

Ainsi, l'interface 100 selon l'invention est particulièrement avantageuse, et ce notamment :
- Du fait qu'une même interface 100 selon l'invention peut être fixée aussi bien sur un élément ouvrant 9 que sur un élément fixe 18 d'un véhicule automobile en utilisant les trous standards destinés à la fixation de la serrure définitive. Cette standardisation de l'interface 100 selon l'invention permet de réduire son coût de fabrication. Et autrement dit, l'interface 100 selon l'invention est une pièce standard qui a de multiples utilisations.
- La fixation de l'interface 100 selon l'invention sur un élément ouvrant 9 ou un élément fixe 18 ne nécessite pas de contraintes ou d'aménagements spécifiques sur ces éléments. L'interface 100 est parfaitement appropriée pour toutes les conceptions d'éléments ouvrants 9 et d'éléments fixes 18, et ce pour tout type de véhicule automobile. Autrement dit, l'interface 100 selon l'invention est parfaitement compatible avec tout type de véhicule automobile, puisqu'elle est fixée sur des trous standards que comportent toujours les éléments ouvrants 9 et les éléments fixes des véhicules automobiles.

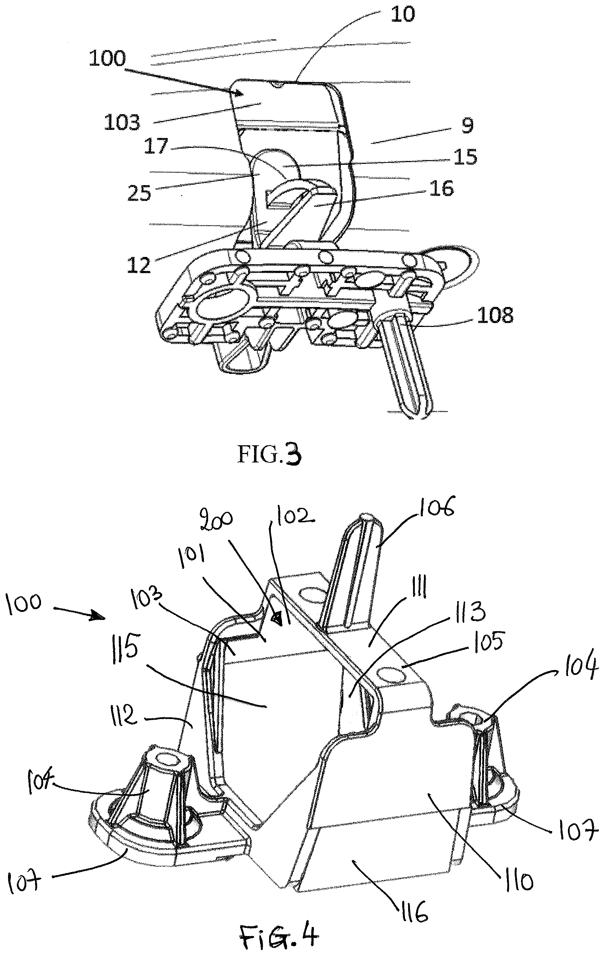

En se référant aux figures 2 et 3, avant le passage dans la ligne de peinture de la carrosserie, l'interface 100 a été fixée sur un premier rebord 10 tranchant de l'élément ouvrant 9 et le dispositif de fermeture provisoire 12 a été fixé sur l'élément fixe 18.

La figure 2 représente un ensemble 109 qui comprend un élément ouvrant 9, un élément fixe 18, l'interface 100 représentée à la figure 1, ainsi qu'un dispositif de fermeture provisoire 12 qui a été fixé sur l'élément fixe 18.

Sur la figure 3 sont en outre visibles les moyens de fixation 108 du dispositif de fermeture provisoire 12 sur l'élément fixe 18.

Sur les figures 2 et 3, le dispositif de fermeture provisoire 12 comprend un corps 13 monobloc qui comporte une butée 14 destinée à coopérer avec un deuxième rebord 20 de l'élément ouvrant 9, lors de la fermeture de l'élément ouvrant 9, ainsi qu'un moyen de retenue sous la forme d'une languette 15.

La languette 15 présente :
- une face avant 24 qui comprend un nez en saillie 15a plat comportant une tranche 15b.
- une face arrière 25.

Le nez en saillie 15a est perpendiculaire à la face avant 24 de la languette 15.

Le corps 13 du dispositif de fermeture provisoire 12 est prolongé dans sa zone correspondant sensiblement à la base de la languette 15, par une platine 16. Cette platine 16 constitue une languette secondaire destinée à encaisser une partie des contraintes et de la déformation de la languette 15. Pour ce faire, la face arrière 25 de la languette 15 et la platine 16 sont reliées par une arche 17 assurant une liaison souple. L'arche 17 est raccordée à la languette 15 en son milieu, et à la platine 16 à son extrémité libre. La flexion de la languette 15 est d'autant limitée que les contraintes et la déformation sont réparties sur diverses parties du dispositif de fermeture provisoire 12.

En référence à la figure 2, initialement, le premier rebord 10 se situe devant la languette 15. Puis, du fait de la rigidité déterminée de l'interface 100, au cours de la fermeture de l'élément ouvrant 9, la deuxième partie de paroi 103 de la première paroi 101 de l'interface 100 vient en contact avec la tranche 15b de la languette 15 de telle sorte qu'elle force cette languette 15 à se déformer en se fléchissant puis à s'effacer de manière à ce que le premier rebord 10 passe derrière la languette 15. Passé le premier rebord 10, l'interface 100 n'exerce plus de contraintes sur la languette 15, la languette 15 reprend alors sa position initiale, grâce à son élasticité. A l'issue de la fermeture, la butée 14 du dispositif de fermeture provisoire 12 vient coopérer avec le deuxième rebord 20 de l'élément ouvrant 9.

Avec une interface 100 telle que représentée sur les figures 1 à 3, au cours de la fermeture de l'élément ouvrant 9, le premier rebord 10 ne vient pas en contact la languette 15, et en particulier avec la tranche 15b de la languette 15. De ce fait, le premier rebord 10 ne risque pas d'abraser la languette 15.

Au cours de l'ouverture, la deuxième partie de paroi 103 de la première paroi 101 de l'interface 100 vient en contact avec la face arrière 25 de la languette 15 de telle sorte qu'elle force cette languette 15 à se déformer en se fléchissant puis à s'effacer de manière à ce que le premier rebord 10 repasse devant la languette 15.

Ainsi, avec ce premier mode de réalisation de l'interface 100, au cours des ouvertures et fermetures de l'élément ouvrant 9 pendant les opérations de peinture, le premier rebord 10 tranchant n'est jamais en contact avec la languette 15. En effet, il s'agit de la deuxième partie de paroi 103 de la première paroi 101 de l'interface 100 qui, au cours des déplacements de l'élément ouvrant 9, vient en contact avec la languette 15 et, du fait de sa rigidité, la force à se déformer élastiquement.

Outre les problèmes de grains évoqués ci-dessus, l'interface 100 présente aussi l'avantage de s'affranchir des problèmes de touchés.

Les problèmes de touchés peuvent survenir du fait des frottements de contact de la languette 15 avec le premier rebord 10 de l'élément ouvrant 9. Cela a pour conséquence visible un écaillement de la peinture (ou un essuyage de cette peinture si elle n'est pas encore sèche,) à proximité du premier rebord 10.

Du fait que la deuxième partie de paroi 103 de la première paroi 101 de l'interface 100 fait saillie du premier rebord 10, comme cela est bien visible sur la figure 3, il peut aussi se produire des frottements de contact de la deuxième partie de paroi 103 de la première paroi 101 de l'interface 100 avec la languette 15. Mais la peinture qui est susceptible de s'écailler du fait de ces frottements de contact sera localisée sur l'interface 100 qui est une pièce qui sera démontée une fois les opérations de peinture de la carrosserie achevées. Autrement dit, cela n'est pas un problème si de la peinture s'écaille sur l'interface 100, ou est enlevée de l'interface 100, alors qu'elle n'est pas encore sèche, et les conséquences visibles des problèmes de touchés n'ont plus lieu avec la mise en place d'une telle interface 100 pour les opérations de peinture.

Les figures 4 à 7 représentent un deuxième mode de réalisation de l'interface 100 selon l'invention.

L'interface 100 selon ce deuxième mode de réalisation de l'invention diffère de l'interface 100 selon le premier mode de réalisation en ce que la deuxième paroi 110 comprend une zone 116 destinée à coopérer avec la butée 14 du dispositif de fermeture provisoire 12. Cette zone 116 réalise la fonction de butée pour la butée 14 du dispositif de fermeture provisoire 12.

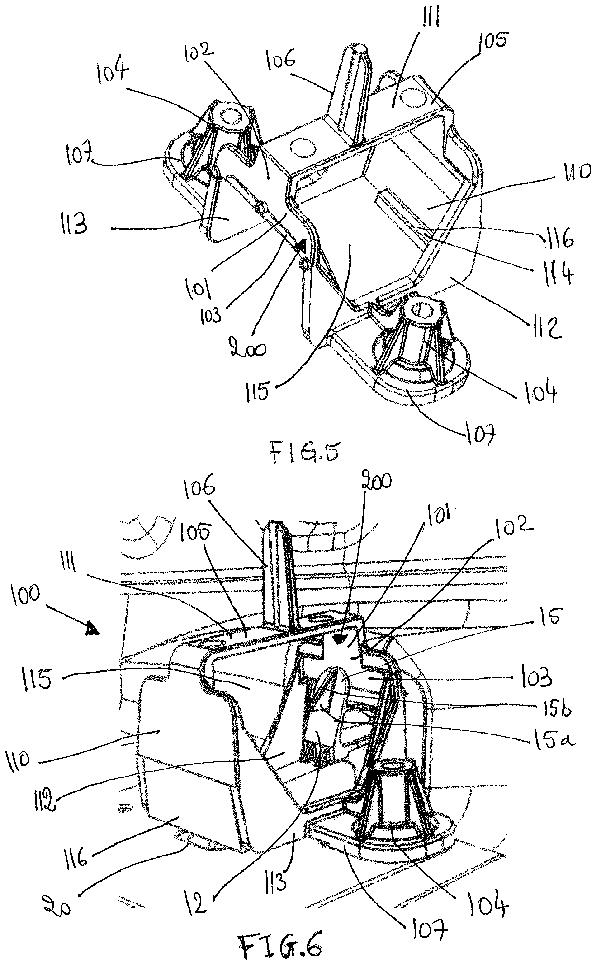

Selon une variante de ce deuxième mode de réalisation de l'interface 100 qui est illustrée aux figures 5 à 7, cette zone 116 comprend un deuxième organe de butée 114 faisant saillie de ladite zone 116.

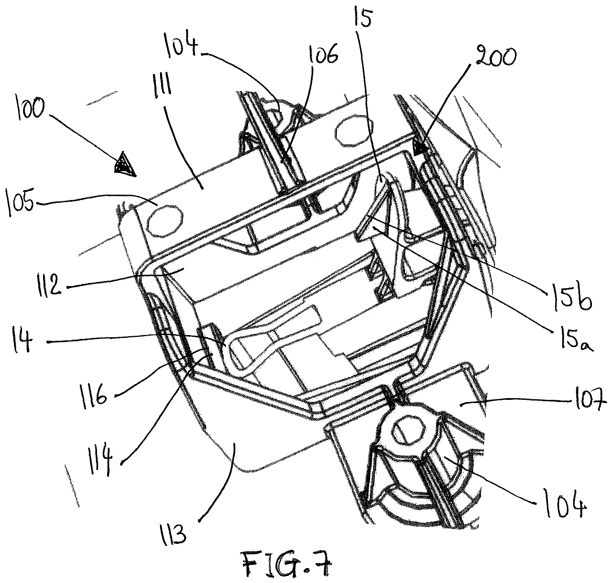

Selon cette variante de l'invention, ce deuxième organe de butée 114 est destiné à coopèrer avec la butée 14 du dispositif de fermeture provisoire 12 à l'issue de la fermeture de l'élément ouvrant 9, et ce comme cela est particulièrement visible à la figure 7.

Ainsi, à la différence de l'interface 100 selon le premier mode de réalisation de l'invention, avec l'interface 100 selon le deuxième mode de réalisation de l'invention qui comprend une zone 116 destinée à coopérer avec la butée 14 du dispositif de fermeture provisoire 12, à l'issue de la fermeture de l'élément ouvrant 9, la butée 14 du dispositif de fermeture provisoire 12 ne coopère plus avec le deuxième rebord 20 de l'élément ouvrant 9 qui peut être aussi tranchant comme le premier rebord 10.

De même que la deuxième partie de paroi 103 qui constitue le premier organe de butée de l'interface 100, la zone 116 de la deuxième paroi 110 de l'interface permet aussi d'éviter les touchés.

En outre, la zone 116 que présente l'interface 100 selon ce deuxième mode de réalisation de l'invention a aussi l'avantage d'éviter les déformations de l'élément ouvrant 9, en particulier lorsqu'il est claqué soit par l'opérateur, soit du fait des chocs créés lors des transferts du véhicule au cours du procédé de fabrication du véhicule automobile.

Autrement dit, l'interface 100 selon ce deuxième mode de réalisation de l'invention présente un organe de protection du dispositif de fermeture provisoire 12 supplémentaire par rapport à l'interface 100 selon le premier mode de réalisation de l'invention.

En effet, avec l'interface 100 selon le deuxième mode de réalisation, le dispositif de fermeture provisoire 12 est protégé non seulement du premier rebord tranchant 10 au niveau de la languette 15 mais aussi du deuxième rebord tranchant 20 de l'élément ouvrant 9 et ce au niveau de sa butée 14.

Par ailleurs, dans ce deuxième mode de réalisation de l'interface 100, les premiers moyens de fixation 104 sont disposés entre les deux zones de sollicitation que sont :
- d'une part la deuxième partie de paroi 103 avec la languette 15, et
- d'autre part la zone 116 avec la butée 14 du dispositif de fermeture provisoire 12.

Cela présente l'avantage que l'interface 100 selon ce deuxième mode de réalisation de l'invention résiste mieux aux contraintes mécaniques.

Bien entendu, la présente invention ne se limite pas aux modes de réalisation d'interface tels que décrits ci-dessus. Il est bien évident qu'elle comprend tous les équivalents techniques des moyens décrits ainsi que leurs combinaisons si celles-ci entrent dans le cadre de l'invention.

## Revendications

1. Interface (100) qui présente un corps (200), ledit corps (200) comporte des premiers moyens de fixation (104) qui permettent à l'interface (100) de se fixer sur un élément ouvrant (9) ou un élément fixe (18) d'un véhicule automobile de manière à venir protéger un dispositif de fermeture provisoire (12) prévu pour être fixé sur l'élément ouvrant (9) ou sur l'élément fixe (18) du contact avec un premier rebord (10) de l'élément ouvrant (9) ou de l'élément fixe (18), ledit dispositif de fermeture provisoire (12) étant du type à comporter au moins un corps (13) muni d'un moyen de retenue élastiquement déformable (15) conçu de manière à maintenir l'élément ouvrant (9) dans une position de fermeture intermédiaire par rapport à l'élément fixe (18), ledit corps (200) de l'interface (100) comprenant en outre au moins un premier organe de butée (103) présentant une rigidité déterminée de manière à ce que les contraintes exercées par le premier organe de butée (103) de l'interface (100) contre le moyen de retenue (15) du dispositif de fermeture provisoire (12), lors du déplacement de l'élément ouvrant (9) d'une position d'ouverture vers la position de fermeture intermédiaire ou lors du déplacement de l'élément ouvrant (9) de la position de fermeture intermédiaire vers une position d'ouverture, forcent le moyen de retenue (15) du dispositif de fermeture provisoire (12) à se déformer et à s'effacer durant le contact du premier organe de butée (103) de l'interface (100) avec le moyen de retenue (15) du dispositif de fermeture provisoire (12),
**caractérisée en ce que** :
- ladite interface (100) comprend une première paroi (101) présentant une première partie de paroi (102) et une deuxième partie de paroi (103), ladite première partie de paroi (102) étant prolongée par ladite deuxième partie de paroi (103), ladite deuxième partie de paroi (103) constituant le premier organe de butée de l'interface (100), lesdits premiers moyens de fixation (104) étant conçus de manière à venir fixer ladite première partie de paroi (102) contre une paroi du premier rebord (10) de l'élément fixe (18) ou de l'élément ouvrant (9), et
- ladite interface (100) présente une portion (105) en forme générale de cage qui comprend une pluralité de parois, ladite première partie de paroi (102) formant une des parois de ladite pluralité de parois de la portion (105) en forme générale de cage.

2. Interface (100) selon la revendication 1, **caractérisée en ce que** la première partie de paroi (102) et la deuxième partie de paroi (103) de la première paroi (101) de l'interface (100) sont coplanaires.

3. Interface (100) selon la revendication 1 ou 2, **caractérisée en ce que** la deuxième partie de paroi (103) de la première paroi (101) de l'interface (100) présente une extrémité libre avec une bordure arrondie.

4. Interface (100) selon l'une quelconque des revendications 1 à 3, **caractérisée en ce qu'**elle comprend en outre au moins un moyen de préhension (106).

5. Interface (100) selon l'une quelconque des revendications 1 à 4, **caractérisée en ce qu'**elle est réalisée en un matériau plastique ou en un matériau métallique.

6. Interface (100) selon l'une quelconque des revendications 1 à 5, **caractérisée en ce que** la portion (105) en forme générale de cage comprend au moins :
- ladite première paroi (101) ;
- une deuxième paroi (110) qui est opposée à la première paroi (101) ;
- une paroi supérieure (111) qui relie la première paroi (101) à la deuxième paroi (110) ;
- une première paroi latérale (112) qui relie la première paroi (101) à la deuxième paroi (110) ;
- une deuxième paroi latérale (113) qui est opposée à la première paroi latérale (112) et relie la première paroi (101) à la deuxième paroi (110).

7. Interface (100) selon la revendication 6, **caractérisée en ce que** la première paroi (101), la deuxième paroi (110), la paroi supérieure (111), la première paroi latérale (112) et la deuxième paroi latérale (113) délimitent un logement (115) destiné à loger le dispositif de fermeture provisoire (12).

8. Interface (100) selon l'une quelconque des revendications 6 à 7, **caractérisée en ce que** la deuxième paroi (110) comprend une zone (116) destinée à coopérer avec une butée (14) que présente le dispositif de fermeture provisoire (12).

9. Kit comprenant :
- au moins une interface (100) selon l'une quelconque des revendications 1 à 8,
- au moins un dispositif de fermeture provisoire (12) du type à comporter au moins un corps (13) muni d'un moyen de retenue élastiquement déformable (15) conçu de manière à maintenir un élément ouvrant (9) dans une position de fermeture intermédiaire par rapport à un élément fixe (18).

10. Ensemble (109) comprenant :
- un élément fixe (18),
- un élément ouvrant (9),
- au moins une interface (100) selon l'une quelconque des revendications 1 à 8,
- au moins un dispositif de fermeture provisoire (12) du type à comporter au moins un corps (13) muni d'un moyen de retenue élastiquement déformable (15) conçu de manière à maintenir l'élément ouvrant (9) dans une position de fermeture intermédiaire par rapport à l'élément fixe (18).

## Patentansprüche

1. Schnittfläche (100), die einen Körper (200) aufweist, wobei der Körper (200) erste Befestigungsmittel (104) umfasst, die es der Schnittfläche (100) erlauben, sich an einem öffnenden Element (9) oder einem stationären Element (18) eines Kraftfahrzeugs derart zu befestigen, dass sie eine Vorrichtung zum vorläufigen Schließen (12), die vorgesehen ist, um auf dem öffnenden Element (9) oder auf dem stationären Element (18) befestigt zu werden, vor Berührung mit einem ersten Rand (10) des öffnenden Elements (9) oder des stationären Elements (18) schützt, wobei die Vorrichtung zum vorläufigen Schließen (12) des Typs ist, der mindestens einen Körper (13) umfasst, der mit einem elastisch verformbaren Rückhaltemittel (15) versehen ist, das derart ausgelegt ist, dass es das öffnende Element (9) in einer Zwischenschließposition in Bezug zu dem stationären Element (18) hält, wobei der Körper (200) der Schnittfläche (100) außerdem mindestens ein erstes Anschlagorgan (103) umfasst, das eine Steifigkeit aufweist, die derart festgelegt ist, dass die Belastungen, die von dem ersten Anschlagorgan (103) der Schnittfläche (100) gegen das Rückhaltemittel (15) der Vorrichtung zum vorläufigen Schließen (12) bei dem Bewegen des öffnenden Elements (9) von einer Öffnungsposition zu der Zwischenschließposition oder bei der Bewegung des öffnenden Elements (9) von der Zwischenschließposition zu einer Öffnungsposition ausgeübt werden, das Rückhaltemittel (15) der Vorrichtung zum vorläufigen Schließen (12) zwingen, sich zu verformen und während der Berührung des ersten Anschlagsorgans (103) der Schnittfläche (100) mit dem Rückhaltemittel (15) der Vorrichtung zum vorläufigen Schließen (12) zu versenken,
**dadurch gekennzeichnet, dass**:
- die Schnittfläche (100) eine erste Wand (101) umfasst, die einen ersten Wandteil (102) und einen zweiten Wandteil (103) umfasst, wobei der erste Wandteil (102) von dem zweiten Wandteil (103) verlängert wird, wobei der zweite Wandteil (103) das erste Anschlagorgan der Schnittfläche (100) ausbildet, wobei die ersten Befestigungsmittel (104) derart ausgelegt sind, dass sie den ersten Wandteil (102) gegen eine Wand des ersten Rands (10) des stationären Elements (18) oder des öffnenden Elements (9) befestigen kommen, und
- die Schnittfläche (100) einen Abschnitt (105) in allgemeiner Käfigform aufweist, der eine Vielzahl von Wänden umfasst, wobei der erste Wandteil (102) eine der Wände der Vielzahl von Wänden des Abschnitts (105) in allgemeiner Käfigform bildet.

2. Schnittfläche (100) nach Anspruch 1, **dadurch gekennzeichnet, dass** der erste Wandteil (102) und der zweite Wandteil (103) der ersten Wand (101) der Schnittfläche (100) koplanar sind.

3. Schnittfläche (100) nach Anspruch 1 oder 2, **dadurch gekennzeichnet, dass** der zweite Wandteil (103) der ersten Wand (101) der Schnittfläche (100) ein freies Ende mit einem gerundeten Rand aufweist.

4. Schnittfläche (100) nach einem der Ansprüche 1 bis 3, **dadurch gekennzeichnet, dass** sie außerdem mindestens ein Greifmittel (106) umfasst.

5. Schnittfläche (100) nach einem der Ansprüche 1 bis 4, **dadurch gekennzeichnet, dass** sie aus einem Plastikwerkstoff oder aus einem metallischen Werkstoff hergestellt ist.

6. Schnittfläche (100) nach einem der Ansprüche 1 bis 5, **dadurch gekennzeichnet, dass** der Abschnitt (105) in allgemeiner Käfigform mindestens Folgendes umfasst:
- die erste Wand (101);
- eine zweite Wand (110), die der ersten Wand (101) entgegengesetzt ist;
- eine obere Wand (111), die die erste Wand (101) mit der zweiten Wand (110) verbindet;
- eine erste Seitenwand (112), die die erste Wand (101) mit der zweiten Wand (110) verbindet;
- eine zweite Seitenwand (113), die der ersten Seitenwand (112) entgegengesetzt ist und die erste Wand (101) mit der zweiten Wand (110) verbindet.

7. Schnittfläche (100) nach Anspruch 6, **dadurch gekennzeichnet, dass** die erste Wand (101), die zweite Wand (110), die obere Wand (111), die erste Seitenwand (112) und die zweite Seitenwand (113) eine Aufnahme (115) abgrenzen, die dazu bestimmt ist, die Vorrichtung zum vorläufigen Schließen (12) aufzunehmen.

8. Schnittfläche (100) nach einem der Ansprüche 6 bis 7, **dadurch gekennzeichnet, dass** die zweite Wand (110) eine Zone (116) umfasst, die dazu bestimmt ist, mit dem Anschlag (14), den die Vorrichtung zum vorläufigen Schließen (12) aufweist, zusammenzuwirken.

9. Bausatz, der Folgendes umfasst:
- mindestens eine Schnittfläche (100) nach einem der Ansprüche 1 bis 8,
- mindestens eine Vorrichtung zum vorläufigen Schließen (12) des Typs, der mindestens einen Körper (13) umfasst, der mit einem elastisch verformbaren Rückhaltemittel (15) versehen ist, das derart ausgelegt ist, dass es ein öffnendes Element (9) in einer Zwischenschließposition in Bezug zu einem stationären Element (18) hält.

10. Baugruppe (109), die Folgendes umfasst:
- ein stationäres Element (18),
- ein öffnendes Element (9),
- mindestens eine Schnittfläche (100) nach einem der Ansprüche 1 bis 8,
- mindestens eine Vorrichtung zum vorläufigen Schließen (12) des Typs, der mindestens einen Körper (13) umfasst, der mit einem elastisch verformbaren Rückhaltemittel (5) versehen ist, das derart verformbar ist, dass es das öffnende Element (9) in einer Zwischenschließposition in Bezug zu dem stationären Element (18) hält.

## Claims

1. An interface (100) which has a body (200), said body (200) includes first fastening means (104) which allow the interface (100) to be fastened on an opening element (9) or on a fixed element (18) of a motor vehicle so as to protect a temporary closure device (12) intended to be fastened on the opening element (9) or on the fixed element (18) of the contact with a first rim (10) of the opening element (9) or of the fixed element (18), said temporary closure device (12) being of the type including at least one body (13) provided with an elastically deformable retaining means (15) designed to hold the opening element (9) in an intermediate closed position relative to the fixed element (18), said body (200) of the interface (100) further comprising at least one first stop member (103) having a rigidity determined in such a way that the stresses exerted by the first stop member (103) of the interface (100) against the retaining means (15) of the temporary closure device (12), upon movement of the opening element (9) from an open position to the intermediate closed position or upon movement of the opening element (9) from the intermediate closed position to an open position, force the retaining means (15) of the temporary closure device (12) to be deformed and to fade during the contact of the first stop member (103) of the interface (100) with the retaining means (15) of the temporary closure device (12), **characterized in that**:
- said interface (100) comprises a first wall (101) having a first wall part (102) and a second wall part (103), said first wall part (102) being extended by said second wall part (103), said second wall part (103) constituting the first stop member of the interface (100), said first fastening means (104) being designed to fasten said first wall part (102) against a wall of the first rim (10) of the fixed element (18) or of the opening element (9), and
- said interface (100) has a generally cage-like portion (105) which comprises a plurality of walls, said first wall part (102) forming one of the walls of said plurality of walls of the generally cage-like portion (105).

2. The interface (100) according to claim 1, **characterized in that** the first wall part (102) and the second wall part (103) of the first wall (101) of the interface (100) are coplanar.

3. The interface (100) according to claim 1 or 2, **characterized in that** the second wall part (103) of the first wall (101) of the interface (100) has a free end with a rounded edge.

4. The interface (100) according to any one of claims 1 to 3, **characterized in that** it further comprises at least one gripping means (106).

5. The interface (100) according to any one of claims 1 to 4, **characterized in that** it is made of a plastic material or of a metallic material.

6. The interface (100) according to any one of claims 1 to 5, **characterized in that** the generally cage-like portion (105) comprises at least:
- said first wall (101);
- a second wall (110) which is opposite the first wall (101);
- an upper wall (111) which links the first wall (101) to the second wall (110);
- a first side wall (112) which links the first wall (101) to the second wall (110);
- a second side wall (113) which is opposite the first side wall (112) and links the first wall (101) to the second wall (110).

7. The interface (100) according to claim 6, **characterized in that** the first wall (101), the second wall (110), the upper wall (111), the first side wall (112) and the second side wall (113) delimit a housing (115) intended to house the temporary closure device (12).

8. The interface (100) according to any one of claims 6 to 7, **characterized in that** the second wall (110) comprises an area (116) intended to cooperate with a stop (14) presented in the temporary closure device (12).

9. A kit comprising:
- at least one interface (100) according to any one of claims 1 to 8,
- at least one temporary closure device (12) of the type including at least one body (13) fitted with an elastically deformable retaining means (15) designed to hold an opening element (9) in an intermediate closed position relative to a fixed element (18).

10. An assembly (109) comprising :
- a fixed element (18),
- an opening element (9),
- at least one interface (100) according to any one of claims 1 to 8,
- at least one temporary closure device (12) of the type including at least one body (13) fitted with an elastically deformable retaining means (15) designed to hold the opening element (9) in an intermediate closed position relative to the fixed element (18).
